(19) Europäisches Patentamt / European Patent Office / Office européen des brevets

(11) EP 2 859 029 B1

(12) **FASCICULE DE BREVET EUROPEEN**

(45) Date de publication et mention de la délivrance du brevet:
**13.07.2016 Bulletin 2016/28**

(21) Numéro de dépôt: **13725710.1**

(22) Date de dépôt: **30.05.2013**

(51) Int Cl.:
***C08G 18/48*** (2006.01) ***B29D 30/04*** (2006.01)
***B60C 1/00*** (2006.01) ***B60C 7/10*** (2006.01)
***B29D 30/06*** (2006.01) ***B60C 19/00*** (2006.01)

(86) Numéro de dépôt international:
**PCT/EP2013/061171**

(87) Numéro de publication internationale:
**WO 2013/182477 (12.12.2013 Gazette 2013/50)**

# (54) BANDAGE PNEUMATIQUE DONT LA PAROI INTERNE EST POURVUE D'UNE COUCHE DE MOUSSE POLYURETHANE SPECIFIQUE

REIFEN MIT EINER INNENWAND MIT EINER SCHICHT AUS SPEZIFISCHEM POLYURETHANSCHAUM

TYRE, THE INNER WALL OF WHICH HAS A LAYER OF SPECIFIC POLYURETHANE FOAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2012 FR 1255395**

(43) Date de publication de la demande:
**15.04.2015 Bulletin 2015/16**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **PARFONDRY, Alain**
  **F-63040 Clermont-Ferrand Cedex 9 (FR)**
- **DELFINO, Antonio**
  **F-63040 Clermont-Ferrand Cedex 9 (FR)**

(74) Mandataire: **Ribière, Joel**
**Manufacture Française des Pneumatiques Michelin**
**23, Place des Carmes-Déchaux**
**DGD/PI - F35 - Ladoux**
**63040 Clermont-Ferrand Cedex 9 (FR)**

(56) Documents cités:
**EP-A1- 1 950 057** **EP-A1- 2 067 634**
**EP-A1- 2 457 748** **US-A1- 2010 038 005**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 859 029 B1

## Description

### 1. DOMAINE DE L'INVENTION

L'invention est relative aux bandages pneumatiques pour véhicules automobiles ainsi qu'aux mousses de polymère utilisables pour la fabrication de tels bandages.

Elle est plus particulièrement relative aux bandages pneumatiques dont la paroi interne ou cavité de gonflage étanche à l'air (ou autre gaz de gonflage) est pourvue d'une couche de mousse polyuréthane destinée à réduire le bruit émis par ces bandages lors du roulage des véhicules.

### 2. ETAT DE LA TECHNIQUE

Il est connu que le bruit émis par un bandage pneumatique en roulage a notamment pour origine les vibrations de sa structure consécutives au contact du bandage avec les irrégularités de la chaussée, provoquant également une génération d'ondes acoustiques diverses. Le tout se manifeste finalement sous forme de bruit, tant a l'intérieur qu'à l'extérieur du véhicule. L'amplitude de ces différentes manifestations est tributaire des modes de vibrations propres du bandage pneumatique mais également de la nature du revêtement sur lequel le véhicule se déplace. La gamme de fréquences correspondant au bruit généré par les bandages pneumatiques s'étend typiquement de 20 à 4 000 Hz environ.

En ce qui concerne le bruit émis à l'extérieur du véhicule, sont pertinentes les diverses interactions entre le bandage pneumatique et le revêtement routier, le bandage pneumatique et l'air, qui vont occasionner une gêne auprès des riverains du véhicule lorsque ce dernier roule sur une chaussée. On distingue également dans ce cas plusieurs sources de bruit telles que le bruit dit d'indentation dû à l'impact des rugosités de la route dans l'aire de contact, le bruit dit de friction essentiellement généré en sortie de l'aire de contact, le bruit dit de sculpture dû à l'arrangement des éléments de sculpture et à la résonance dans les différents sillons. La gamme de fréquences concernées correspond ici typiquement à une plage allant de 300 à 3 000 Hz environ.

En ce qui concerne le bruit perçu à l'intérieur du véhicule, deux modes de propagation du son coexistent :

- les vibrations sont transmises par le centre roue, le système de suspension, la transmission pour finalement générer du bruit dans l'habitacle ; on parle alors de transmission par voie solidienne, généralement dominante pour les basses fréquences du spectre (jusqu'à environ 400 Hz) ;
- les ondes acoustiques émises par le bandage pneumatique sont directement propagées par voie aérienne à l'intérieur du véhicule, ce dernier faisant office de filtre ; on parle alors de transmission par voie aérienne, qui domine généralement dans les hautes fréquences (environ 600 Hz et au delà).

Le bruit dit "*road noise*" fait plutôt référence au niveau global perçu dans le véhicule et dans une gamme de fréquence allant jusqu'à 2000 Hz.

Enfin, une contribution importante du bruit perçu à l'intérieur du véhicule est apportée par le bruit de cavité ("*cavity noise*") qui fait référence à la gêne due à la résonance de la cavité de gonflage du bandage pneumatique, ce bruit dominant dans un domaine de fréquences spécifique d'environ 190 à 230 Hz.

Pour réduire les bruits de roulage d'un bandage pneumatique, en particulier le bruit de cavité, il est connu de pourvoir sa paroi interne d'une couche de mousse polyuréthane, comme décrit par exemple dans les brevets ou demandes de brevet WO 2006/117944 ou US 7 975 740, WO 2007/058311 ou US 2009/0053492, US 2007/0175559, WO 2008/062673 ou US 2010/0038005, US 2009/0053492, WO 2010/000789 ou US 2011/0308677, EP 1 529 665 ou US 7 182 114.

Le document EP 2 457 748 A1 décrit un procédé de préparation d'un bandage pneumatique dont la paroi interne est pourvue d'une couche de mousse en polyuréthane. Les exemples 1-3 de EP 2 457 748 A1 décrivent la réaction entre un polyétherdiol basé sur du propylène oxyde et du MDI. L'expérience montre toutefois que les solutions techniques retenues, soit ne permettent pas d'obtenir des mousses polyuréthane à la fois légères et absorbant efficacement le bruit, soit sont relativement complexes à mettre en oeuvre et donc coûteuses.

### 3. BREVE DESCRIPTION DE L'INVENTION

Les Demanderesses ont découvert lors de leurs recherches une formulation de polyuréthane spécifique qui permet d'obtenir une mousse légère et absorbant efficacement le bruit. Elle présente l'avantage d'être simple et peu coûteuse, elle est en outre facile à mettre en oeuvre dans le bandage pneumatique de l'invention.

En conséquence, la présente invention concerne un bandage pneumatique, à l'état vulcanisé, dont la paroi interne est pourvue d'une couche de mousse en polyuréthane, caractérisé en ce que le polyuréthane est à base d'un diphénylméthane diisocyanate (en abrégé « MDI ») et d'un polyol ayant un taux d'oxyde d'éthylène supérieur à 50 % (% en poids).

Les bandages pneumatiques de l'invention sont particulièrement destinés à équiper des véhicules à moteur de type tourisme, incluant les véhicules 4x4 (à quatre roues motrices) et véhicules SUV ("*Sport Utility Vehicles*"), ainsi que des véhicules industriels tels que camionnettes et "poids-lourd" (par exemple métro, bus, engins de transport routier).

L'invention ainsi que ses avantages seront aisément compris à la lumière de la description et des exemples de réalisation qui suivent, ainsi que des figures 1 à 3 relatives à ces exemples qui schématisent, en coupe radiale :

- un exemple d'un bandage pneumatique conforme à l'invention, vulcanisé, dont la paroi interne est pourvue d'une couche de mousse PU qui couvre substantiellement toute la paroi interne du pneu (Fig. 1) ;
- un exemple de bandage conforme à l'invention, vulcanisé, dont la paroi interne est pourvue d'une couche de mousse PU s'étendant uniquement sous le sommet, sensiblement d'une épaule à l'autre (Fig. 2) ;
- un autre exemple de bandage conforme à l'invention, vulcanisé, dont la paroi interne est pourvue d'un cordon de mousse PU qui est enroulé hélicoïdalement sous le sommet en plusieurs tours, selon un angle proche de zéro par rapport à la direction circonférentielle (Fig. 3).

## 4. DESCRIPTION DETAILLEE DE L'INVENTION

Dans la présente description, sauf indication expresse différente, tous les pourcentages (%) indiqués sont des pourcentages en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le bandage pneumatique de l'invention a donc pour caractéristique essentielle que sa paroi interne est pourvue, recouverte pour tout ou partie, d'au moins une couche de mousse de polymère polyuréthane (en abrégé « PU »), apte à réduire le bruit de cavité, ledit PU étant à base de diphénylméthane diisocyanate (en abrégé « MDI ») et d'un polyol ayant un taux d'oxyde d'éthylène supérieur à 50 % en poids ; ces composés sont décrits en détail ci-après.

On rappellera ici brièvement qu'un PU, de manière générale, est le produit de réaction d'un polyisocyanate (composé porteur d'au moins deux fonctions isocyanate -NCO) et d'un polyol (composé porteur d'au moins deux fonctions alcool -ROH), le polyol utilisé ayant généralement ses fonctions alcools fixées soit sur des polyéthers, soit sur des polyesters.

La mousse PU du pneu de l'invention a donc pour particularité d'être à base d'un composé diisocyanate spécifique, en l'occurrence un MDI, qui est combiné à un polyol lui-même spécifique, en l'occurrence un polyéther ayant un taux élevé d'oxyde d'éthylène (supérieur à 50%).

Selon un mode de réalisation préférentiel, le MDI est le seul diisocyanate ou, si plusieurs composés diisocyanates sont présents, constitue le diisocyanate majoritaire en poids, représentant préférentiellement dans le dernier cas plus de 50% du poids total des composés diisocyanates. Si plusieurs diisocyanates sont présents, le MDI représente plus préférentiellement encore plus de 70%, en particulier plus de 90% en poids du total des composés diisocyanates. A titre d'exemple d'autre diisocyanate utilisable en coupage avec le MDI, on citera par exemple le TDI (toluène diisocyanate, habituellement utilisé en mélange d'isomères 2,4 et 2,6).

Toutefois, selon un mode de réalisation particulièrement préférentiel, le MDI, en particulier le 4,4'-MDI, est le seul diisocyanate constitutif de la mousse PU du bandage pneumatique de l'invention.

Sont utilisables tous les isomères du MDI (notamment 2,2'-MDI, 2,4'-MDI, 4,4'-MDI) et leurs mélanges, ainsi que des MDI dits polymériques comportant en plus du MDI des oligomères de formule suivante (avec n égal ou supérieur à 1) :

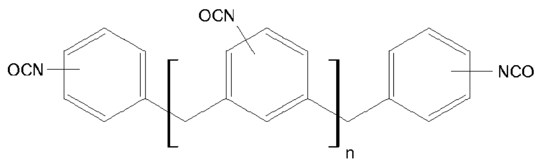

ou des mélanges desdits MDI et MDI polymériques précités. Les composés de type carbodiimide / urétonimine, allophanate, uréthanne, urée, oxazolidone, obtenus par réaction partielle de MDI avec lui-même ou avec des composés hydroxylés, aminés ou époxydés sont également inclus.

Plus préférentiellement, le MDI utilisé est le 4,4'-MDI (4,4'-diphénylméthane diisocyanate), pour rappel de formule :

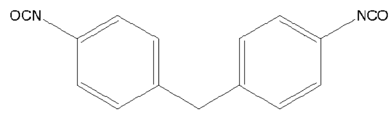

,

ou, si plusieurs MDI (diphénylméthane diisocyanates) sont utilisés, constitue le MDI majoritaire en poids, représentant préférentiellement dans le dernier cas plus de 50% du poids total des composés MDI ; plus préférentiellement encore, si plusieurs MDI sont présents, le 4,4'-MDI représente plus de 70%, en particulier plus de 90% en poids du total des composés MDI.

Selon un autre mode de réalisation préférentiel, le polyol à fort taux d'oxyde d'éthylène (supérieur à 50%, de préférence supérieur à 70%, plus préférentiellement encore supérieur à 90%), est le seul polyol constitutif de la mousse PU du pneu de l'invention, ou, si plusieurs polyols sont présents, constitue le polyol majoritaire en poids, notamment dans le deuxième cas pour plus de 50% en poids du total des polyols utilisés.

Si plusieurs polyols sont présents, le polyol à fort taux d'oxyde d'éthylène représente préférentiellement plus de 70%, plus préférentiellement plus de 90% en poids du total des polyols. A titre d'exemples d'autres polyols utilisables en coupage avec le polyol à fort taux

d'oxyde d'éthylène, on citera par exemple des polyéthers tels que les polyols polyéther à base d'oxyde de propylène ou d'oxyde de butylène, d'autres monomères époxydes, des polyols polyesters, polycarbonates, polyoxytétraméthylène glycols ou des polyols de structure hybride à base de plusieurs des monomères précités.

Toutefois, selon un mode de réalisation particulièrement préférentiel, le polyol à fort taux d'oxyde d'éthylène (supérieur à 50%, de préférence supérieur à 70%, encore plus préférentiellement supérieur à 90%) est le seul polyol constitutif de la mousse PU.

Préférentiellement, le polyol à fort taux d'oxyde d'éthylène est un polyol polymérisé statistiquement avec de l'oxyde d'éthylène et de l'oxyde de propylène, avec plus préférentiellement entre 50% et 90% en poids d'oxyde d'éthylène et de 10% à 50% d'oxyde de propylène ; plus préférentiellement encore, le taux d'oxyde d'éthylène représente de 70% à 85%, notamment de 75% à 80% en poids d'un tel polyol.

De tels polyols ou polyéthers préférentiels sont bien connus et disponibles commercialement, par exemple auprès de la société BASF sous la dénomination commerciale « Lupranol 2048 », auprès de la société Dow sous la dénomination commerciale « Voranol CP1421 », ou encore auprès de la société Bayer sous la dénomination commerciale « Desmophen 41WB01 ».

Selon un autre mode de réalisation préférentiel, le rapport molaire diisocyanate/ polyol est compris entre 2 et 10, de préférence entre 3 et 6, en particulier entre 4 et 5.

Les deux constituants de base (MDI et polyol) précédemment décrits peuvent être totalement mélangés et préréagis avant moussage ; on parle alors de procédé dit au prépolymère. Dans le cas d'un prémélangeage (préréaction partielle), on parle alors de semi ou quasi-prépolymère.

La voie prépolymère est préférée car elle permet notamment de simplifier la formulation de la mousse qui est intrinsèquement plus stable et plus facile à répartir dans la cavité du bandage pneumatique, d'obtenir des temps de moussage plus rapides car seule la réaction de moussage doit être maîtrisée, de faciliter l'adhérence au support, la mousse appliquée en phase liquide adhérant mieux à la gomme intérieure du pneumatique, sans nécessiter en particulier d'utiliser une colle supplémentaire. Elle permet finalement de mieux adapter la formulation de la mousse aux performances souhaitées.

Bien entendu, de manière plus classique, les deux constituants de base (MDI et polyol) peuvent également n'être mis au contact l'un de l'autre qu'au dernier moment, lors du moussage ; le polyol pourrait être préalablement mélangé avec l'agent moussant et les autres additifs usuels.

La fabrication de la mousse PU se fait de manière connue de l'homme du métier par réaction du mélange MDI/ polyol (et autres additifs) en présence d'un agent d'expansion ou agent moussant, ou d'un précurseur d'agent moussant. On préfère une expansion obtenue par voie chimique, en particulier par réaction d'eau sur l'isocyanate avec formation consécutive de gaz $CO_2$ en tant qu'agent moussant.

La composition initiale de la mousse PU peut comporter également d'autres additifs usuels pour ce type d'application, comme par exemple des précurseurs d'agents de moussage autres que l'eau (par exemple directement un gaz tel que $CO_2$), des allongeurs de chaîne, des agents réticulants, des charges par exemple du type minérales telles que silice, talc, craie, sels de calcium ou de baryum, ayant un effet thixotropant, des agents de stabilisation par exemple de type alkanolamines, des amines primaires aromatiques, des triols de faible masse moléculaire tels que glycérol, des amines primaires aliphatiques, des catalyseurs tels que des amines tertiaires, des agents tensio-actifs, des anti-oxydants, des agents de modification de la rhéologie, des régulateurs de viscosité ou agents épaississants (voir par exemple demande WO 2013/023125) tels que des polyéthylène oxydes ou des éthers de cellulose à haute masse moléculaire, des colorants ou des pigments.

La mousse PU peut-être préparée préalablement (ce qui est plutôt le cas général) puis découpée aux dimensions souhaitées, par exemple sous forme de bandes ou bandelettes plus étroites, enfin collée à l'intérieur du pneumatique (vulcanisé) par tout moyen approprié, par exemple à l'aide d'une composition adhésive ou d'un adhésif double face, de manière bien connue en soi.

Selon un autre mode de réalisation préférentiel avantageux, la mousse PU peut être fabriquée in situ, directement dans le bandage pneumatique (vulcanisé) par coulée simultanée des réactifs (par exemple prépolymère et eau) dans la cavité du bandage en rotation, selon des procédés dont les principes généraux ont été par exemple décrits dans les documents brevet US 4 418 093 ou US 6 508 898.

Ainsi, le liquide réactif à base de MDI et polyol s'expanse immédiatement au contact de l'eau en une mousse qui se solidifie rapidement sur la surface intérieure du bandage pneumatique.

Un tel procédé est particulièrement avantageux et économique puisqu'il permet de mettre en place la mousse PU en une seule étape, à une vitesse rapide, sans nécessiter toutes les opérations préalables de préparation de la mousse, découpage aux dimensions souhaitées puis collage de la mousse à l'intérieur du pneumatique.

Les propriétés physiques de la mousse PU, notamment ses performances acoustiques, peuvent être ajustées par la formulation spécifique retenue, la quantité de mousse appliquée. Une grande liberté de formes est possible sans coût prohibitif puisque le liquide réactif peut être déposé suivant un dessin prédéfini.

Selon un mode de réalisation préférentiel de l'invention, la mousse PU dont la formulation a été précédemment décrite, du type mousse souple, présente au moins une des caractéristiques ci-dessous :

- une densité, exprimée par la masse volumique apparente à coeur (« *apparent core density* ») mesurée selon la norme ISO 845, qui est comprise entre 0,020 et 0,070 $g/cm^3$, plus préférentiellement dans un domaine de 0,030 à 0,060 $g/cm^3$ ;
- une résistance à la compression, exprimée par la caractéristique de contrainte-déformation relative en compression mesurée selon la norme ISO 3386-1, à 50% de compression volumique, qui est comprise entre 2 et 11 kPa, de préférence comprise dans un domaine de 2 à 5 kPa ;
- une déformation rémanente en compression (« *compression set* »), mesurée selon la norme ISO 1856 (méthode A) à 90% de compression et à une température de 70°C, qui est inférieure à 25%, de préférence inférieure à 15% ;
- une résistivité à l'air (*« air flow resistivity »*) supérieure à 10 000 $Pa.s.m^{-2}$ plus préférentiellement supérieure à 20 000 $Pa.s.m^{-2}$, mesurée selon la norme ISO 4638.

La norme ISO 4638 ci-dessus est utilisée de la manière suivante : le modèle de base (décrit dans « Permeability of open cell foamed materials », AN Gent & KC Rusch, J of Cellular Plastics, 46-51, 1966) utilise l'équation:

$$\Delta P/(e.U) = (\eta/K) + \rho(U/B)$$

dans laquelle « e » représente l'épaisseur (en mètre) de l'échantillon de mousse testé, U le débit d'air en $m^3/s$, $\eta$ représente la viscosité de l'air (soit $1,85.10^{-5}$ Pa.s à 20°C), K représente la perméabilité à l'air en $m^2$, p représente la masse volumique de l'air (soit 1,2 $kg/m^3$ à 20°C), et B représente le coefficient d'inertie au flux d'air.

La résistivité à l'air est représenté par le rapport ($\eta$/K) exprimé en $Pa.s.m^{-2}$ (ou Rayl/m). Le principe est de mesurer U à travers un échantillon de mousse d'épaisseur « e » donnée tout en établissant divers niveaux de perte de charge ($\Delta$P). On met ensuite en graphe la courbe $\Delta P/(e.U) = f(U)$ dont la pente est p/B et l'ordonnée à l'origine est $\eta$/K.

Plus préférentiellement encore, cette mousse PU du bandage de l'invention présente en combinaison la totalité des propriétés ci-dessus, en particulier la totalité des propriétés les plus préférentielles énoncées ci-dessus.

Dans le bandage pneumatique de l'invention, l'épaisseur de la couche de mousse est comprise entre 5 et 100 mm, de préférence entre 10 et 50 mm, en particulier entre 20 et 40 mm

On a constaté, de manière avantageuse, que la mousse PU selon l'invention, dont la formulation spécifique a été précédemment décrite en détail, possédait en outre d'excellentes propriétés adhésives vis-à-vis des compositions de caoutchouc constitutives de la paroi interne des bandages pneumatiques, ainsi que vis-à-vis des produits du type badigeon destinés à faciliter le démoulage de ces bandages après cuisson, lors de leur séparation finale de la membrane de cuisson.

## 5. EXEMPLES DE REALISATION DE L'INVENTION

### 5.1. Exemples de bandages conformes à l'invention

La composition de mousse de polymère précédemment décrite est avantageusement utilisable dans les bandages pneumatiques de tous types de véhicules, particulièrement dans les bandages pour véhicules tourisme.

A titre d'exemple, les figures 1 à 3 annexées représentent de manière très schématique (notamment sans respect d'une échelle spécifique) des exemples de coupes radiales de bandages pneumatiques pour véhicule automobile à armature de carcasse radiale, conformes à l'invention, ces bandages étant à l'état cuit (c'est-à-dire vulcanisé).

Ces bandages pneumatiques 1 comportent une zone sommet 2 renforcé par une armature de sommet ou ceinture 6, deux flancs 3 et deux bourrelets inextensibles 4, chacun de ces bourrelets 4 étant renforcé avec une tringle 5. La zone sommet 2 délimitée latéralement par deux épaules (2a, 2b) est surmontée d'une bande de roulement (non représentée sur cette figure schématique, pour simplification), la ceinture 6 étant par exemple constituée d'au moins deux nappes croisées superposées renforcées par des câbles métalliques. Une armature de carcasse 7 est enroulée autour des deux tringles 5 dans chaque bourrelet 4, le retournement 8 de cette armature 7 étant par exemple disposé vers l'extérieur des bandages pneumatiques qui sont ici représentés montés sur leur jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du bandage pneumatique qui est situé à mi-distance des deux bourrelets 4 et passe par le milieu de l'armature de sommet 6).

Ces bandages pneumatiques 1 comportent en outre, de manière bien connue, une couche de gomme intérieure 10 (communément appelée " gomme intérieure " ou " *inner liner* ") qui définit la face radialement interne du bandage pneumatique, au contact de la cavité de gonflage 11. Cette couche 10 étanche à l'air permet le gonflement et le maintien sous pression du bandage 1 ; ses propriétés d'étanchéité lui permettent de garantir un taux de perte de pression relativement faible, permettant de maintenir le bandage pneumatique gonflé, en état de fonctionnement normal, pendant une durée suffisante, normalement de plusieurs semaines ou

plusieurs mois.

Ces bandages pneumatiques conformes à l'invention sont caractérisés en ce que leur paroi interne 10 est au moins en partie recouverte, du coté de la cavité 11, d'une couche 12 de mousse en PU apte à absorber en partie le bruit de cavité.

Conformément à un premier mode de réalisation possible de l'invention, ladite paroi interne (10) comporte sur sa face radialement interne une couche (12) de mousse PU qui s'étend substantiellement sur toute la paroi interne du bandage pneumatique, se prolongeant d'un flanc à l'autre, pratiquement jusqu'au niveau du crochet de jante lorsque le bandage pneumatique 1 est en position montée, comme illustré par exemple à la figure 1.

Selon un autre mode de réalisation possible de l'invention, la couche (12) pourrait recouvrir, toujours sur sa face radialement interne, une partie seulement de la couche (10) étanche à l'air, dans ce cas préférentiellement dans la zone sommet du pneumatique, comme illustré par exemple à la figure 2.

Dans les exemples de bandages représentés aux figures 1 et 2 ci-dessus, la mousse PU a été par exemple préparée préalablement, puis découpée aux dimensions souhaitées, enfin collée à l'intérieur du bandage pneumatique vulcanisé, selon des techniques conventionnelles bien connues de l'homme du métier.

Selon un autre mode de réalisation, préférentiel, la mousse PU est fabriquée in situ par coulée directe des réactifs à l'intérieur de la cavité 11 du bandage pneumatique en rotation, sur sa couche étanche à l'air 10.

Dans un tel cas, une fois l'opération de fabrication in situ terminée, la paroi interne 10 apparaît sous le sommet 2 pourvue d'un ou plusieurs enroulements 12 en hélice (par exemple 3 à 5 enroulements), juxtaposés ou pas, d'un cordon continu de mousse PU, de forme généralement cylindrique et de diamètre relativement élevé, ces enroulements lorsqu'ils sont plusieurs pouvant être orientés selon un faible angle par rapport à la direction circonférentielle du bandage pneumatique, comme illustré par exemple à la figure 3, de manière à pouvoir enrouler le même cordon continu plusieurs fois. Dans une telle configuration, par convention, on entend par épaisseur de la couche de mousse PU, le diamètre moyen (ou tout au moins son épaisseur maximale dans la direction radiale si sa section droite n'est pas circulaire), du cordon de mousse PU.

Bien entendu, d'autres modes de réalisation sont possibles, la technique de coulée décrite ci-dessus permettant d'envisager des formes, longueurs, dessins de cordons de mousse PU qui peuvent varier largement en fonction des applications particulières visées.

Dans les exemples des figures annexées, la couche 10 (par exemple d'épaisseur égale à environ 1,0 mm) est par exemple à base de caoutchouc butyl, elle présente une formulation usuelle pour gomme intérieure. La couche 12 de mousse PU est quant à elle constituée d'une composition de polyuréthane telle que précédemment décrite à base du MDI et du polyol à fort taux d'oxyde d'éthylène ; son épaisseur est par exemple comprise entre 20 et 40 mm.

Ainsi disposée entre la couche d'étanchéité 10 et la cavité 11 du bandage pneumatique, la couche de mousse PU permet de réduire de manière substantielle, comme démontré dans les exemples qui suivent, les bruits dus au roulage perçus à l'intérieur du véhicule.

<u>5.2. Essais</u>

Dans les essais qui suivent, une mousse PU selon l'invention, a été préparée comme suit, à partir de deux composants notés ici A et B.

Du 4,4'-MDI (« Suprasec » 1306 de la société Huntsman, 16 400 g) a été fondu à 50°C et versé dans un réacteur de 100 litres avec un agitateur à pales ; ce réacteur comprenait un circuit de recirculation externe dans lequel a été inséré un mélangeur statique précédé par un branchement permettant l'addition ultérieure du polyol. Dans un second récipient, le polyol (« Lupranol 2048 » de la société BASF, 38 780 g) a été tout d'abord chauffé à 70°C. Puis ce dernier a été versé lentement au-dessus du mélangeur statique sur le MDI à l'état liquide, en présence de 100 ppm de chlorure de benzoyle (agent régulateur d'acidité), pendant une période de 1 heure, alors que la température du mélange était maintenue à 85°C, et que le MDI était soumis à une recirculation permanente par passage dans le mélangeur statique.

Le mélange de prépolymère (composant A) ainsi obtenu était un liquide incolore ayant (mesures réalisées 24 h plus tard) un pourcentage de liaisons -NCO de 7,8% (% en masse, mesuré selon la norme EN 1242) et une viscosité de 6500 mPa.s à 25°C.

Puis le prépolymère (composant A) ainsi préparé a été transféré dans la cuve d'une machine de micro-coulée de polyuréthanne à deux composants (A et B), du type basse pression (Dosamix, société Secmer), chauffée à 50°C.

Le composant B avait la formulation suivante, exprimée en parties en poids pour 100 parties de prépolymère A :

- eau : 1,93 parts ;
- triéthanolamine : 0,15 parts ;
- diaza-bicyclo-2,2,2-octane : 0,15 parts.

Une variante de fabrication du composant B ci-dessus peut consister à ajouter une partie du polyol (par exemple, dans l'essai ci-dessus, environ 3 parts de « Lupranol 2048 ») pour faciliter la mise en oeuvre.

Finalement, le composant B, également chauffé à 50°C, a été mélangé au composant A dans une tête de mélange conique dentée à stator lisse, selon les conditions de moussage qui suivent :

- rapport pondéral A/B : 100/2,45 (soit respectivement 5,69 g/s et 0,14 g/s) ; ce rapport correspond de manière connue à un « indice NCO » (stoechiométrique) de 85 ;

- pressions respectives : 4 bars (pour A comme pour B).

Le liquide moussant ainsi obtenu a été coulé in situ dans la cavité de bandages pneumatiques de marque « MICHELIN » (« Primacy HP »), dimensions 255/45 R18, maintenus en rotation (30 tours/min) autour de leur axe horizontal, sous la forme d'un cordon continu sensiblement cylindrique (diamètre d'environ 30 mm) enroulé 3 fois sous le sommet (comme illustré très schématiquement à la figure 3) selon un angle compris entre 1,5 et 2,0 degrés par rapport à la direction circonférentielle du bandage.

La mousse produite ainsi in situ, outre une excellente adhésion sur la gomme intérieure du pneumatique (enduite de badigeon), les propriétés suivantes :

- une masse volumique apparente à coeur, selon ISO 845, égale à environ 45 g/dm$^3$ ;
- une caractéristique de contrainte-déformation relative en compression, selon ISO 3386-1, à 50% de compression volumique, égale à environ 4,1 kPa ;
- une déformation rémanente en compression, selon ISO 1856 (méthode A), à 90% de compression et à une température de 70°C, égale à environ 20% ;
- une résistivité à l'air, selon ISO 4638, égale à environ 120 000 Pa.s.m$^{-2}$.

Lors d'essais complémentaires, le présent essai a été répété en ajoutant, dans le composant B, environ 3% (% en poids par rapport à la quantité d'eau) de polyéthylène oxyde (« Polyox » WSR N-750 de la société Dow, de poids moléculaire égal à environ 300 000), afin d'en augmenter la viscosité.

Les bandages pneumatiques conformes à l'invention ainsi préparés, pourvus de leur couche de mousse PU, ont été ensuite gonflés à 2,5 bars et soumis à un test de roulage et test d'absorption acoustique tels que décrits ci-après, et comparés à des pneumatiques témoins rigoureusement identiques hormis l'absence de mousse PU dans la cavité de ces bandages témoins.

Puis, l'évaluation de la performance vis-à-vis du bruit de cavité a été réalisée par roulage des pneumatiques testés sur une piste macro-rugueuse (béton bitumineux de granulométrie 6 mm, avec une macro-texture de 0,4 à 0,5 mm). Le bruit est enregistré à l'intérieur du véhicule (marque « MERCEDES », « Classe S ») à l'aide d'un mannequin équipé d'une tête acoustique (microphones placés au fond d'oreilles artificielles). La vitesse est stabilisée et on réalise 4 enregistrements de 20 s chacun à une fréquence de 4 kHz. On calcule le spectre (résolution de 1 Hz) du signal temporel enregistré et on moyenne les auto-spectres de chacune des deux oreilles et de chacun des quatre enregistrements.

Le bruit de cavité est celui mesuré (moyenné) dans un domaine de fréquence s'étendant de 180 à 230 Hz, caractéristique de la résonance de la cavité d'air contenue dans le pneu.

A une vitesse de 60 km/h, on a constaté que ce bruit de cavité était réduit de 2,5 dB(A) par rapport aux bandages témoins. Ce résultat est exprimé en énergie acoustique (dB(A)) qui correspond à l'intégration de la pression acoustique en fonction de la fréquence sur le domaine de fréquence considéré.

Une telle différence est très significative pour l'homme du métier. Le résultat obtenu s'est même révélé légèrement meilleur (-0,5 dB(A)), c'est ce qui a été constaté lors de tests comparatifs supplémentaires, que ceux observés dans le cas de mousses PU commerciales, conventionnellement prédécoupées puis collées dans la cavité de bandages pneumatiques témoins.

Ainsi, grâce à l'invention proposée, il s'est avéré possible de diminuer notablement les bruits de cavité dus au roulage des pneumatiques, sans affecter leurs autres performances de roulage, avec en outre un impact minimal sur leur coût de fabrication.

La formulation de polyuréthane spécifique selon l'invention permet d'obtenir une mousse légère et absorbant efficacement le bruit, qui présente l'avantage d'être simple et peu coûteuse, d'être très facile de mise en oeuvre en rendant possible une coulée directe des réactifs dans un bandage pneumatique en rotation.

Enfin, des tests comparatifs ont été conduits sur d'autres formulations pour mousse PU, qui ont clairement démontré que :

- avec un polyol présentant moins de 50% d'oxyde d'éthylène (« Lupranol » L2090 de BASF), la mousse trop ouverte n'avait pas de cohésion suffisante, tendait à collapser pendant la fabrication même du bandage pneumatique selon le procédé de coulée (in situ) préférentiel précédemment décrit ;
- que le remplacement du MDI par un autre composé diisocyanate, en l'occurrence du TDI (« Scuranate T80 » de la société Perstorp ; 80% en poids d'isomère 2,4), la formulation étant identique par ailleurs, conduisait à des mousses trop compactes et fermées, de très fortes densités (supérieures à 200 kg/m$^3$), qui ne permettent pas d'atténuer le bruit efficacement.

## Revendications

1. Bandage pneumatique, à l'état vulcanisé, dont la paroi interne est pourvue d'une couche de mousse en polyuréthane, **caractérisé en ce que** le polyuréthane est à base d'un diphénylméthane diisocyanate (en abrégé « MDI ») et d'un polyol ayant un taux d'oxyde d'éthylène supérieur à 50 % (% en poids).

2. Bandage selon la revendication 1, dans lequel le MDI est le seul diisocyanate ou, si plusieurs diisocyanates sont présents, constitue le diisocyanate majoritaire en poids.

3. Bandage selon la revendication 1 ou 2, dans lequel le MDI est le 4,4'-diphénylméthane diisocyanate.

4. Bandage selon l'une quelconque des revendications précédentes, dans lequel le polyol ayant un taux d'oxyde d'éthylène supérieur à 50 % est le seul polyol ou, si plusieurs polyols sont présents, constitue le polyol majoritaire en poids.

5. Bandage selon l'une quelconque des revendications précédentes, dans lequel le taux d'oxyde d'éthylène du polyol est supérieur à 70%.

6. Bandage selon l'une quelconque des revendications précédentes, dans lequel le rapport molaire diisocyanate/ polyol est compris entre 2 et 10, de préférence entre 3 et 6.

7. Bandage selon l'une quelconque des revendications précédentes, dans lequel la mousse en polyuréthane présente une masse volumique apparente à coeur, mesurée selon la norme ISO 845, qui est comprise entre 0,020 et 0,070 g/cm$^3$, de préférence dans un domaine de 0,030 à 0,060 g/cm$^3$.

8. Bandage selon l'une quelconque des revendications précédentes, dans lequel la mousse en polyuréthane présente une caractéristique de contrainte-déformation relative en compression, mesurée selon la norme ISO 3386-1 à 50% de compression volumique, qui est comprise entre 2 et 11 kPa.

9. Bandage selon l'une quelconque des revendications précédentes, dans lequel la mousse en polyuréthane présente une déformation rémanente en compression, mesurée selon la norme ISO 1856 (méthode A) à 90% de compression et à une température de 70°C, qui est inférieure à 25%, de préférence inférieure à 15%.

10. Bandage selon l'une quelconque des revendications précédentes, dans lequel la mousse en polyuréthane présente une résistivité à l'air, mesurée selon la norme ISO 4638, qui est supérieure à 10 000 Pa.s.m$^{-2}$, de préférence supérieure à 20 000 Pa.s.m$^{-2}$.

11. Bandage selon l'une quelconque des revendications précédentes, dans lequel l'épaisseur de la couche de mousse est comprise entre 5 et 100 mm, de préférence entre 10 et 50 mm

**Patentansprüche**

1. Luftreifen, im vulkanisierten Zustand, wobei dessen Innenwand mit einer Schicht aus Polyurethanschaum versehen ist, **dadurch gekennzeichnet, dass** das Polyurethan auf einem Diphenylmethandiisocyanat ("MDI" abgekürzt) und auf einem Polyol mit einem Ethylenoxidgehalt von mehr als 50 % (Gewichts-%) basiert.

2. Reifen nach Anspruch 1, wobei das MDI das einzige Diisocyanat ist oder, wenn mehrere Diisocyanate vorliegen, das gewichtsmäßig überwiegende Diisocyanat darstellt.

3. Reifen nach Anspruch 1 oder 2, wobei es sich bei dem MDI um 4,4'-Diphenylmethandiisocyanat handelt.

4. Reifen nach einem beliebigen der vorhergehenden Ansprüche, wobei das Polyol mit einem Ethylenoxidgehalt von mehr als 50 % das einzige Polyol ist oder, wenn mehrere Polyole vorliegen, das gewichtsmäßig überwiegende Polyol darstellt.

5. Reifen nach einem beliebigen der vorhergehenden Ansprüche, wobei der Ethylenoxidgehalt des Polyols mehr als 70 % beträgt.

6. Reifen nach einem beliebigen der vorhergehenden Ansprüche, wobei das Diisocyanat/Polyol-Molverhältnis im Bereich von 2 bis 10, vorzugsweise von 3 bis 6, liegt.

7. Reifen nach einem beliebigen der vorhergehenden Ansprüche, wobei der Polyurethanschaum eine Materialdichte aufweist, die bei einer Messung gemäß der Norm ISO 845 im Bereich von 0,020 bis 0,070 g/cm$^3$, vorzugsweise im Bereich von 0,030 bis 0,060 g/cm$^3$, liegt.

8. Reifen nach einem beliebigen der vorhergehenden Ansprüche, wobei der Polyurethanschaum eine Druckspannungs-Verformungseigenschaft aufweist, die bei einer Messung gemäß der Norm ISO 3386-1 im Bereich von 2 bis 11 kPa liegt, wenn die Volumenkompression 50 % beträgt.

9. Reifen nach einem beliebigen der vorhergehenden Ansprüche, wobei der Polyurethanschaum einen Druckverformungsrest aufweist, der bei einer Messung gemäß der Norm ISO 1856 (Methode A) weniger als 25 %, vorzugsweise weniger als 15 %, beträgt, wenn die Kompression 90 % beträgt und die Temperatur 70 °C beträgt.

10. Reifen nach einem beliebigen der vorhergehenden Ansprüche, wobei der Polyurethanschaum eine Luftstromdurchlässigkeit aufweist, die bei einer Messung gemäß der Norm ISO 4638 mehr als 10.000 Pa.s.m$^{-2}$, vorzugsweise mehr als 20.000 Pa.s.m$^{-2}$,

beträgt.

**11.** Reifen nach einem beliebigen der vorhergehenden Ansprüche, wobei die Dicke der Schaumstoffschicht im Bereich von 5 bis 100 mm, vorzugsweise von 10 bis 50 mm, liegt.

**Claims**

**1.** Pneumatic tyre, in the vulcanized state, the inner wall of which is provided with a layer of polyurethane foam, **characterized in that** the polyurethane is based on a diphenylmethane diisocyanate (abbreviated to MDI) and on a polyol having an ethylene oxide content of greater than 50% (% by weight).

**2.** Tyre according to Claim 1, in which the MDI is the only diisocyanate or, if several diisocyanates are present, forms the predominant diisocyanate by weight.

**3.** Tyre according to Claim 1 or 2, in which the MDI is 4,4'-diphenylmethane diisocyanate.

**4.** Tyre according to any one of the preceding claims, in which the polyol having an ethylene oxide content of greater than 50% is the only polyol or, if several polyols are present, forms the predominant polyol by weight.

**5.** Tyre according to any one of the preceding claims, in which the ethylene oxide content of the polyol is greater than 70%.

**6.** Tyre according to any one of the preceding claims, in which the diisocyanate/polyol molar ratio is between 2 and 10, preferably between 3 and 6.

**7.** Tyre according to any one of the preceding claims, in which the polyurethane foam has an apparent core density, measured according to the ISO 845 standard, which is between 0.020 and 0.070 g/cm$^3$, preferably in a range from 0.030 to 0.060 g/cm$^3$.

**8.** Tyre according to any one of the preceding claims, in which the polyurethane foam has a stress/strain characteristic in compression, measured according to the ISO 3386-1 standard at 50% volume compression, which is between 2 and 11 kPa.

**9.** Tyre according to any one of the preceding claims, in which the polyurethane foam has a compression set, measured according to the ISO 1856 standard (method A) at 90% compression and at a temperature of 70°C, which is less than 25%, preferably less than 15%.

**10.** Tyre according to any one of the preceding claims, in which the polyurethane foam has an air flow resistivity, measured according to the ISO 4638 standard, which is greater than 10 000 Pa.s.m$^{-2}$, preferably greater than 20 000 Pa.s.m$^{-2}$.

**11.** Tyre according to any one of the preceding claims, in which the thickness of the foam layer is between 5 and 100 mm, preferably between 10 and 50 mm.

**Fig. 1**

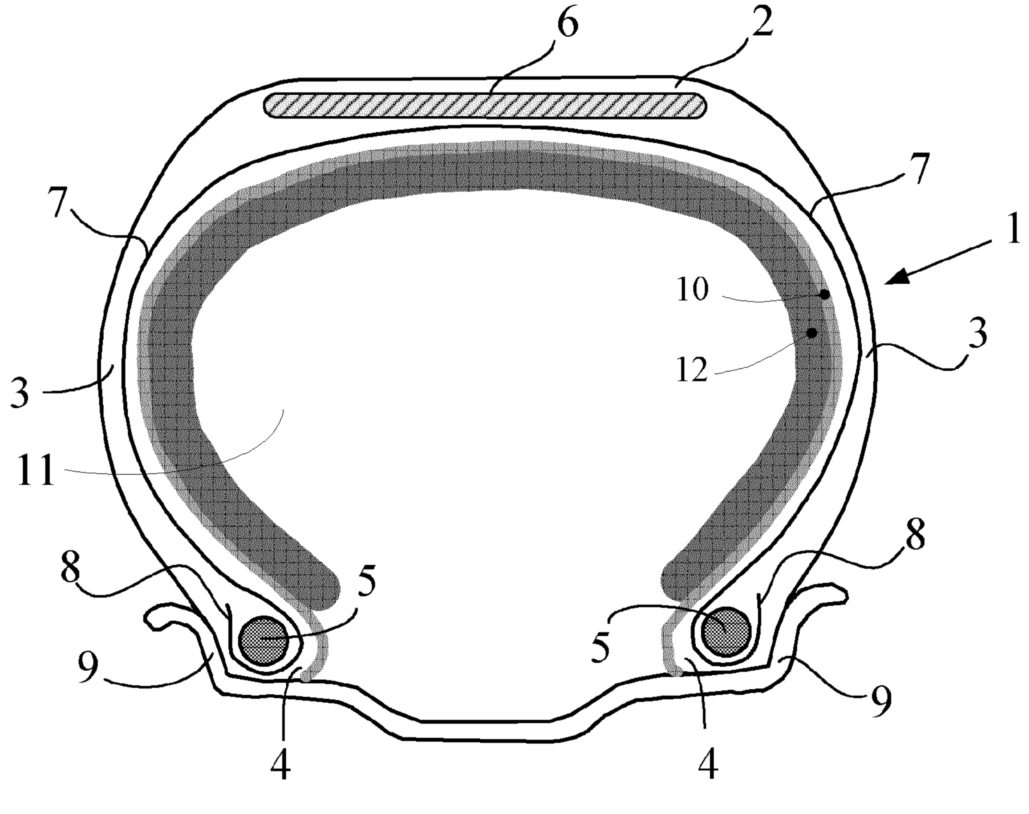

**Fig. 2**

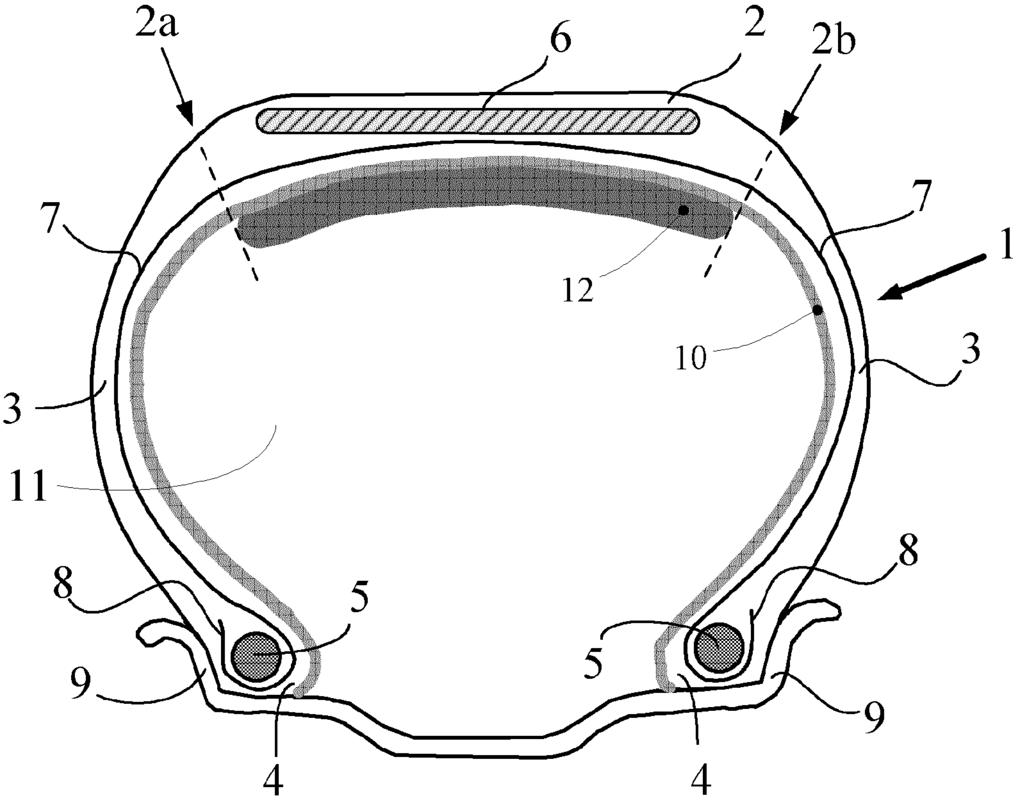

**Fig. 3**

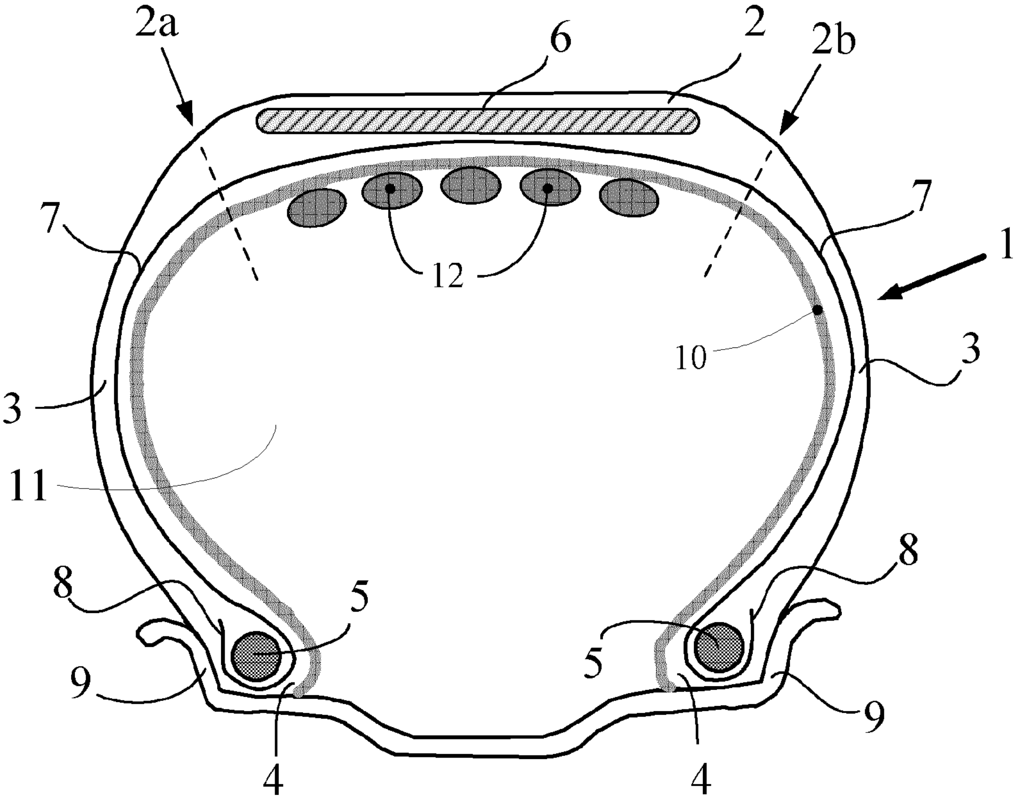

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2006117944 A
- US 7975740 B
- WO 2007058311 A
- US 20090053492 A
- US 20070175559 A
- WO 2008062673 A
- US 20100038005 A
- WO 2010000789 A
- US 20110308677 A
- EP 1529665 A
- US 7182114 B
- EP 2457748 A1
- WO 2013023125 A
- US 4418093 A
- US 6508898 B


### Littérature non-brevet citée dans la description


- **AN GENT ; KC RUSCH.** Permeability of open cell foamed materials. *J of Cellular Plastics,* 1966, 46-51